# EUROPEAN PATENT APPLICATION

(11) **EP 4 375 030 A1**
(43) Date of publication of application: **29.05.2024**
(21) Application number: 23831658.2
(22) Date of filing: 12.01.2023
(51) Int. Cl.: B25J 15/02, B25J 15/06

(54) **GRIPPER HAVING ACTIVELY BENDABLE GRIPPING SURFACE**

(30) Priority: 29.06.2022 KR 20220079785; 05.01.2023 KR 20230001716
(71) Applicant: Korea Institute of Machinery & Materials, Daejeon 34103 (KR)
(72) Inventor: SONG, Sung-Hyuk, Daejeon 34070 (KR); PARK, Chan Hun, Daejeon 35248 (KR); PARK, Dong Il, Sejong 30144 (KR); KIM, Byung In, Sejong 30151 (KR); BAK, Jeongae, Daejeon 34109 (KR); PARK, Jongwoo, Sejong 30062 (KR); SEO, Hyunuk, Seoul 08711 (KR); HAN, Byoung-Kil, Daejeon 34130 (KR); LEE, Joon Ho, Suwon-si Gyeonggi-do 16304 (KR); SEO, Yongsin, Daejeon 34103 (KR); LEE, Jae Young, Daejeon 34032 (KR); JUNG, Hyun Mok, Daejeon 34022 (KR)
(74) Representative: Lewis Silkin LLP
(86) International application number: PCT/KR2023/000603
(87) International publication number: WO 2024/005291

(57) **Abstract**

A gripper includes a body portion, a deformation extension portion and a driving unit. The deformation extension portion has a gripping surface on which an object is gripped. The deformation extension portion is connected to a side surface of the body portion. The driving unit is configured to apply a force to the deformation extension portion.

## Description

### BACKGROUND

### 1. Field of Disclosure

The present disclosure of invention relates to a gripper capable of active folding of a gripping surface, and more specifically the present disclosure of invention relates to a gripper capable of active folding of a gripping surface, in which the gripper easily grips objects, especially thin and elongated objects through relatively simple operations, by actively transforming the griping surface for gripping the object into folding.

### 2. Description of Related Technology

A vacuum gripper is a device that adsorbs and grips an object to be gripped by suction force applied from the outside, and is used to perform various tasks, such as gripping the object and moving the object to a predetermined position.

In the vacuum gripper, the vacuum gripper includes a grip head that changes according to the shape of the object for more effective gripping of the object. A technology for gripping the object by changing the shape of the grip head according to the shape of the object is disclosed in Korean Patent No. 10-2017984.

However, even when gripping the object by changing the shape of the grip head, a problem arises in which the gripping force for the object is not effectively maintained. Then, as disclosed in US Patent No. 9457477, research continues to improve the gripping force on the objec7t by including fine particles such as beads inside the grip head.

Even though, the gripping of the object may not be implemented effectively. In particular, when the shape of the object has a relatively thin thickness, such as a bar or a stick, but extends long in one direction, there is a limitation that it is difficult to effectively grip the object using a conventional grip head.

Related prior arts are Korean Patent No. 10-2017984 and US Patent No. 9457477.

### SUMMARY

The present invention is developed to solve the above-mentioned problems of the related arts. The present invention provides a gripper capable of active folding of a gripping surface, in which the gripper easily grips objects, especially thin and elongated objects through relatively simple operations, by actively transforming the griping surface for gripping the object into folding.

According to an example embodiment, the gripper includes a body portion, a deformation extension portion and a driving unit. The deformation extension portion has a gripping surface on which an object is gripped. The deformation extension portion is connected to a side surface of the body portion. The driving unit is configured to apply a force to the deformation extension portion.

In an example, the deformation extension portion may extend along a center of the gripping surface along a first direction. The gripping surface may be folded around the deformation extension portion to grip the object as the force is applied to the deformation extension portion.

In an example, the deformation extension portion may extend through the body portion at a position of a first height from the gripping surface.

In an example, the gripper may further include a plurality of opening portions passing through the gripping surface and extending into the body portion, a fixing portion disposed over the body portion and configured to fix the body portion, and a suction unit connected to an upper portion of the fixing portion and configured to provide a suction force to the opening portions.

In an example, the deformation extension portion may include a deformation applying portion extending on the gripping surface, a first extension portion extending along a first side of the fixing portion and connected to the driving unit, and a second extension portion extending along a second side of the fixing portion opposite to the first side and connected to the driving unit.

In an example, the gripper may further include a plurality of tension wires extending on the gripping surface along a second direction substantially perpendicular to the first direction, without interfering with the deformation extension portion.

In an example, the tension wires may be arranged with a constant distance along the first direction, and a surface tension of the gripping surface along the second direction may be larger than that along the first direction.

In an example, a tensile stiffness of the tension wires may be larger than a stiffness of the body portion, and a compressive stiffness of the tension wires may be same as or smaller than the stiffness of the body portion.

In an example, the body portion may have a flexible material, and the gripping surface may have a plane surface or a curved surface in which an edge is protruded and a central portion is recessed.

In an example, the gripper may further include an extension portion extending toward a lower direction from an edge of the gripping surface. The extension portion may have a pair of inclined surfaces formed symmetrically along a central line where the gripping surface is folded in gripping the object, and the pair of the inclined surfaces may be tightly adhered to each other in gripping the object.

In an example, the gripping surface may have a rectangular shape, and the extension portion may extend toward the lower direction from four edges of the rectangular shape to form a gripping surface between the extension portion and the gripping surface.

In an example, the extension portion may include first and second extension surfaces, each having the pair of the inclined surfaces, facing each other and having the same shape, and third and fourths extension surfaces, each extending the same length, facing each other and having the same shape.

In an example, each of the pair of the inclined surfaces may have a triangular shape and a length may increase from the central line to the third extension surface or the fourth extension surface. Each of the third and fourth extension surfaces may extend outwardly from the direction in which the body portion extends downward.

In an example, each of the third and fourth extension surfaces may have a plurality ribs, and the ribs may extend toward the lower direction and may be spaced apart from each other by a predetermined distance.

In an example, the gripper may further include a rigid portion disposed under the body portion, having a stiffness larger than that of the body portion, and extending along the side surfaces of the body portion. The deformation extension portion may be fixed at the rigid portion.

In an example, the rigid portion may include first and second frames respectively extending from a pair of first and second side surfaces among the side surfaces of the body portion. Each of the first and second frames may include first and second separation portions separated with each other with respect to a portion at which the deformation extension portion is connected.

In an example, each of the first and second side surfaces may include a wrinkle portion formed at a center, and a pair of first and second surfaces respectively formed at both sides of the wrinkle portion. The wrinkle portion may have a compressive stiffness lower than that of each of the first and second surfaces.

In an example, the driving unit may be screw-coupled through a fixing portion formed on an upper surface of the body portion and may move in an up and down direction. The deformation extension portion may include a horizontal extension portion connected to the driving unit, and a pair of first and second extension portions respectively extending along a lower direction from both ends of the horizontal extension portion to be connected to the rigid portion

In an example, a gripping space may be formed inside of the body portion, and a suction force may be provided into the gripping space to perform suction on the object.

In an example, a mesh portion may be formed in the gripping space to block foreign substances from being flowed into the gripping space.

According to the present example embodiments, as a tension is applied to a deformation extension portion extending from a body portion along a first direction, the body portion is folded to grip the object, and thus the thin and elongated object may be effectively gripped.

Since the body portion includes a flexible material, the body portion is easily deformed and a gripping force for the object is increased as the tension is applied to the deformation extension portion and thus the object may be effectively gripped. Here, the gripping fore for the object may be more enhanced not only when the gripping surface of the body portion is flat but especially when the gripping surface has a central portion with a curved and recessed surface.

In addition, in addition to the gripping of the object, a suction force is applied through opening portions from a suction unit and thus, a vacuum state is maintained at a gripped portion in gripping the object and the object may be gripped more easily.

Further, in addition to the deformation extension portion, a plurality of tension wires is additionally configured, and thus the tension along a direction vertical to the extension direction of the gripped object is maintained relatively larger and the gripping force for the object may be more enhanced.

Here, the positions of the tension wires and the deformation extension portion from the gripping surface are variously changed as long as the positions do not interfere with each other, and thus design flexibility may be enhanced and more effective gripping for various kinds of objects may be implemented.

In addition, an extension portion extends from the gripping surface, and especially the extension portion extends outwardly, and thus a relatively larger gripping area may be secured at an initial state and an end portion is tightly adhered with the relatively larger gripping area at a gripping state. Thus, the object having more diverse shapes and structures may be effectively gripped.

In addition, a plurality of ribs is formed at the extension portion, and thus the gripping force and the fixing force for the object may be more enhanced.

In addition, a rigid portion is formed at the body portion, and the body portion is induced to be folded along a center in a form in which the rigid portions are folded together, so that a stable folding operation may be induced in gripping the object and the gripping force may be more enhanced.

In addition, the folding structure of the rigid portion is performed by the driving of the driving part and the deformation extension portion having a shape like a wire, and the position of the driving part is constantly variable in up and down directions by a rotation due to a screw connection, so that the folding operation of the body portion for gripping the object may be stably and consistently performed.

In addition, in a general case in which the body portion is not folded, the suction force is provided into a gripping surface and the suction for the object is performed, and the suction force is provided in case of the folding of the body portion, and thus the gripping force for the object may be more enhanced.

In addition, a wrinkle portion is formed in the center of the folded side in the body portion and the wrinkle portion has a relatively lower compressive stiffness compared to the surroundings, and thus more easily folding may be implemented at the center of the body portion in folding the body portion.

In addition, a mesh portion is configured in the gripping surface and thus an inflow of foreign substances into the gripping surface may be minimized in gripping the object.

### BRIEF DESCRIPTION OF THE DRAWINGS

FIG. 1 is a front view illustrating a gripper according to an example embodiment of the present invention;
FIG. 2 is a perspective view illustrating a body portion and a fixing portion of FIG. 1;
FIG. 3A is a perspective view illustrating a connection state between a deformation extension portion and a tension wire of FIG. 2, and FIG. 3B is a plan view illustrating a cross-sectional surface along an 'A' plane of FIG. 2;
FIG. 4A to FIG. 4C are side views illustrating a deformed state of the body portion according to an operation of the deformation extension portion, in the gripper of FIG. 1;
FIG. 5A is a perspective view illustrating a body portion and a fixing portion in a gripper according to another example embodiment of the present invention, and FIG. 5B is a perspective view illustrating a connection state of a deformation extension portion and a tension wire of FIG. 5A;
FIG. 6 is a perspective view illustrating a gripping state of an object using the gripper of FIG. 5A;
FIG. 7A is a perspective view illustrating a body portion and a fixing portion in a gripper according to still another example embodiment of the present invention, and FIG. 7B is a perspective view illustrating a connection state of a deformation extension portion and a tension wire of FIG. 7A;
FIG. 8A is a perspective view illustrating a body portion and a fixing portion in a gripper according to still another example embodiment of the present invention, and FIG. 8B is a perspective view illustrating a connection state of a deformation extension portion of FIG. 8A;
FIG. 9 is a front view illustrating a gripper according to still another example embodiment to the present invention;
FIG. 10 is a perspective view illustrating a gripping surface and an extension portion of FIG. 9;
FIG. 11A and FIG. 11B are front views illustrating a gripping state of an object in the gripper having the extension portion;
FIG. 12 is a perspective view illustrating a gripping surface and an extension portion in an gripper according to still another example embodiment of the present invention;
FIG. 13 is a perspective view illustrating a gripper according to still another example embodiment of the present invention;
FIG. 14 is a perspective view illustrating the gripper of FIG. 13 in a different direction;
FIG. 15 is a perspective view illustrating a state in which the body portion of the gripper of FIG. 13 retracts like a pincer-shape;
FIG. 16 is a perspective view illustrating a gripper according to still another example embodiment of the present invention; and
FIG. 17 is a perspective view illustrating a gripper according to still another example embodiment of the present invention.

### * Reference numerals

| | | | |
|---|---|---|---|
| 10, 11, 12, 13, 14, 15, 16, 17, 18 : | | gripper | |
| 100, 101, 1200, 1201, 1202 : | body portion | | |
| 120, 121 : | gripping surface | 200 : | fixing portion |
| 250 : | suction unit | 260 : | air pressure line |
| 300, 301, 302, 1300 : | deformation extension portion | | |
| 310, 311, 312, 1310 : | first extension portion | | |
| 320, 321, 322, 1320 : | second extension portion | | |
| 330, 331, 332 : | deformation applying portion | 350, 1350 : | driving unit |
| 400, 401 : | tension wire | ', 501 : | expansion portion |
| 510, 520, 530, 540 : | expansion surface | 511, 512 : | first inclined surface |
| 521, 522 : | second inclined surface | 535, 545 : | rib |
| 600 : | rigid portion | 700 : | joint unit |
| 1213 : | wrinkle portion | 1206 : | mesh portion |

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention. Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention is described more fully hereinafter with reference to the accompanying drawings, in which embodiments of the invention are shown.

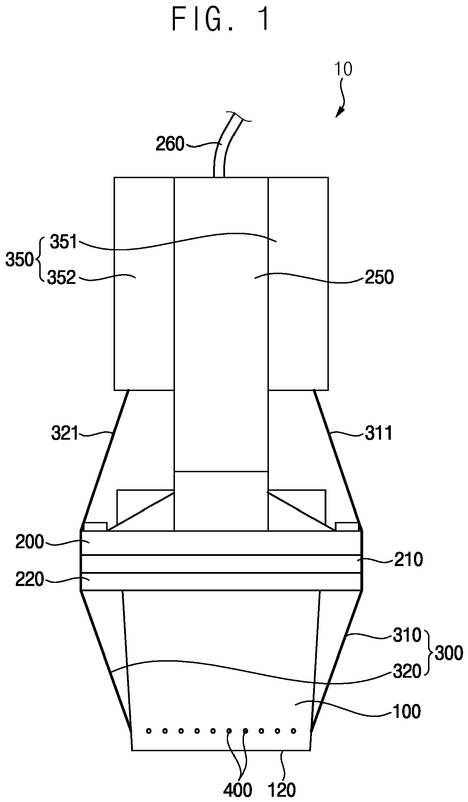

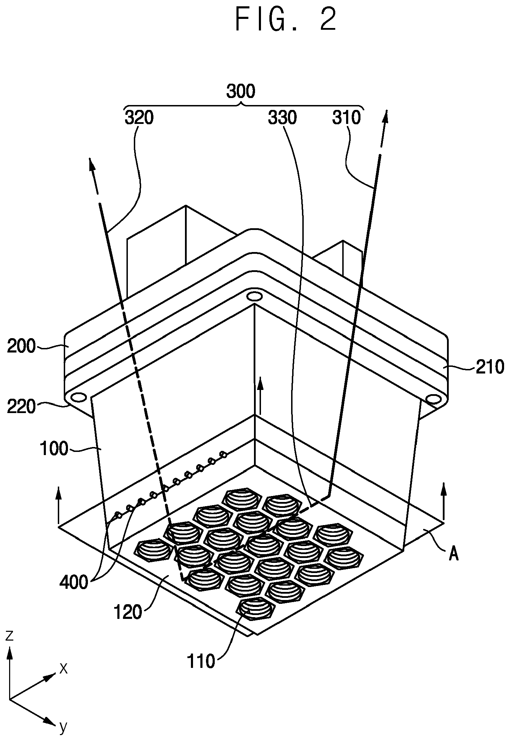

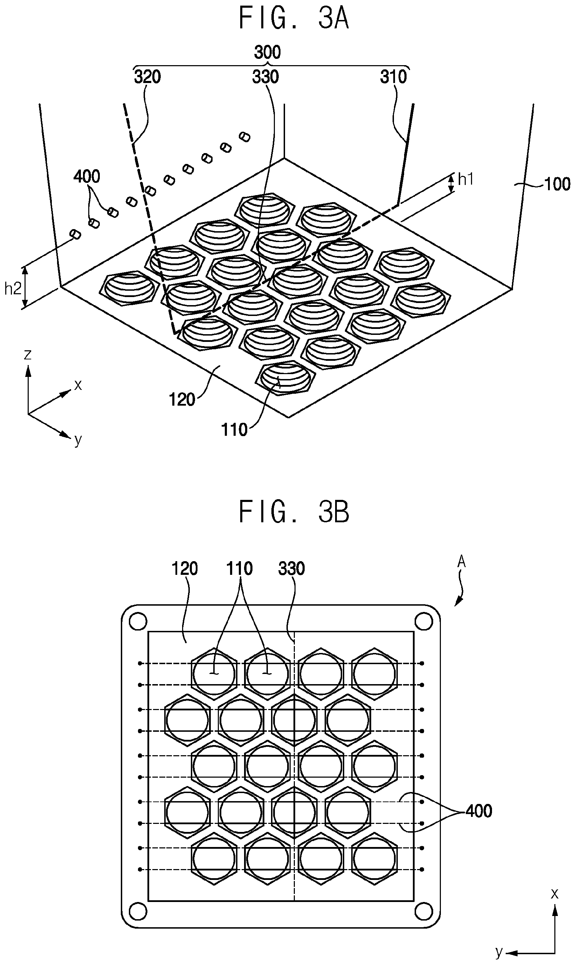

FIG. 1 is a front view illustrating a gripper according to an example embodiment of the present invention. FIG. 2 is a perspective view illustrating a body portion and a fixing portion of FIG. 1. FIG. 3A is a perspective view illustrating a connection state between a deformation extension portion and a tension wire of FIG. 2, and FIG. 3B is a plan view illustrating a cross-sectional surface along an 'A' plane of FIG. 2.

Referring to FIG. 1 to FIG. 3B, the gripper 10 according to the present example embodiment includes a body portion 100, a fixing portion 200, a suction unit 250, an air pressure line 260, a deformation extension portion 300, a driving unit 350 and a tension wire 400. In addition, the gripper 10 may further include a plurality of opening portions 110.

As illustrated in the figure, the body portion 100 may have a cube shape, but not limited to thereto and may have various kinds of three-dimensional shapes.

In the body portion 100, the surface heading a lower portion of FIG. 1 is a gripping surface 120. Although not shown in FIG. 1, the gripping surface 120 makes contact with a target object (hereinafter, the object) and is the surface performing the suction on the object and gripping the object.

In the present example embodiment, the gripping surface 120 has a plane shape, and as the body portion 100 has the cube shape, the plane may be a rectangular shape. The gripping surface 120 may be a flat shape extending flat without including any bends or curved surfaces.

The openings 110 pass through the body portion 100 from the gripping surface 120 toward an inside of the body portion 100. Although not shown in the figure, each of the openings 110 may be open until the fixing portion 200 and the suction force is provided through the openings 110 from the suction unit 250.

Here, the openings 110 are spaced apart from each other by a predetermined distance, and thus a sidewall is formed between the openings 110 adjacent to each other to divide the openings 110.

The sidewall is not formed as a separate member, and the sidewall is to be a partition naturally formed between the openings 110 as the openings 110 are formed from the gripping surface 120 of the body portion 100 toward the inside of the body portion 100 in a line shape.

Finally, in the body portion 100, the openings 110 which are spaced apart from each other by a constant distance and are divided by the sidewall are formed.

As illustrated in FIG. 3B, in each of the openings 110, a cross-sectional shape along a plane ('A' plane) formed along a second direction Y perpendicular to a first direction X may have a hexagonal shape.

Accordingly, the openings 110 have a honeycomb shape in a whole and are formed in the body portion 100.

Alternatively, in each of the openings 110, the cross-sectional shape along the 'A' plane may not be limited to the hexagonal shape, and may have a polygonal shape such as a triangular shape, a rectangular shape, a pentagonal shape, and etc. or a shape such as a circular shape or an oval shape.

Further, although not shown in the figure, a separate elastic member may be disposed inside of each of the openings 110, and an elastic force along a third direction Z which is perpendicular to both of the first and second directions X and Y may be generated.

The body portion 100 has a flexible material with a constant stiffness, and thus the sidewall also has the same flexible material. Thus, the shape of the body portion 100 is naturally deformed according to the shape of the object, when the body portion 100 grips the object with the gripping surface 120 making contact with the object.

As the tension is applied to the deformation extension portion 300 explained below, the gripping surface 120 is folded and the body portion 100 is deformed in gripping the object, and this will be explained below in detail.

Although the shape of the body portion 100 is deformed, each of the openings 110 remains partitioned from adjacent openings by the sidewall. Here, as explained below, the suction force provided from the suction unit 250 is supplied to each of the openings.

Accordingly, the openings 110 are formed in the body portion 100, but the openings 110 may be omitted and the body portion 100 may only perform the gripping.

Here, the body portion 100 may have the cube shape with the flexible material and without the openings 110, and the gripping surface may make direct contact with the object.

However, for the convenience of the explanation, in the figures, the openings 110 are illustrated in the body 100.

The fixing portion 200 is a frame fixing the body portion 100 and is disposed opposite to the gripping surface 120, and the fixing portion 200 is connected to the suction unit 250.

The suction unit 250 receives the suction force from outside, and provides the suction force to each of the openings 110 through the fixing portion 200. Thus, the object on the gripping surface 120 may be gripped and inhaled by the suction force to the openings 110. Here, in gripping the object, a vacuum state may be maintained due to the suction force.

Here, although not show in detail, the suction force from the suction unit 250 is distributed to each of the openings 110 and the suction force provided to each of the openings 110 is prevented from being provided to the adjacent opening 110 by the sidewall.

The air pressure line 260 is a suction force providing line which is connected to an external air providing part and provides the suction force that is an air pressure.

The deformation extension portion 300 includes a deformation applying portion 330 extending along the first direction X in a center of the gripping surface 120, a first extension portion 310 extending upwardly from a first end of the deformation extension portion 330, and a second extension portion 320 extending upwardly from a second end of the deformation extension portion 330.

Here, the deformation extension portion 300 may be a single wire formed integrally, and the names of the deformation applying portion 330, the first extension portion 310 and the second extension portion 320 are for convenience of explanation.

The deformation extension portion 300 may be not necessarily formed of the flexible material such as a wire, and may have a structure such as a bar extending with a predetermined rigidity.

The deformation applying portion 330 extends in the center of the gripping surface 120 along the first direction X. Here, as illustrated in FIG. 3A, the deformation applying portion 330 is positioned upwardly at a first height h1 from the gripping surface 120.

The deformation applying portion 330 is positioned at the first height h1, and passes through the body portion 100.

Here, the first height h1 may be changed variously, and also may be '0(zero)' and then the deformation applying portion 330 make contact with the gripping surface 120.

The first extension portion 310 extends from the first end of the deformation applying portion 330 upwardly, which means toward the fixing portion 200. In addition, the second extension portion 320 extends from the second end of the deformation applying portion 330 upwardly, which means toward the fixing portion 200.

Here, as the first extension portion 310 extends upwardly, the first extension portion 310 is supported by a first side 210 of the fixing portion 200, and as the second extension portion 320 extends upwardly, the second extension portion 320 is supported by a second side 220.

As explained above, when the body portion 100 has the cube shape, the fixing portion 200 has a rectangular frame shape having a predetermined thickness and thus the first and second sides 210 and 220 extend in parallel with forming opposite side surfaces.

Thus, the first and second extension portions 310 and 320 extend upwardly, with supported by the first and second sides 210 and 220, respectively.

Alternatively, an additional fixing member may be disposed to fix or support the extension of the first and second extension portions 310 and 320.

Accordingly, an upper end 311 of the first extension portion 310 is connected to a first driving part 351 of the driving unit 350, and an upper end 321 of the second extension portion 320 is connected to a second driving part 352 of the driving unit 350.

Then, the first driving part 351 applies a tension to the first extension portion 310 and the second driving part 352 applies a tension to the second extension portion 320. Thus, the deformation extension portion 300 having the deformation applying portion 330 is pulled by receiving the tension in the direction of the arrow shown in FIG. 2.

Accordingly, when the deformation extension portion 300 is pulled in the arrow direction, the center of the gripping surface 120 in which the deformation applying portion 330 extends receives the force upwardly, and then the body portion 100 is compressed by being folded in the center. The operation or the deformation of the body portion 100 is explained in detail below.

Here, , at least one of the pair of the first and second driving parts 351 and 352 of the driving unit 350 is driven to provide a driving force to at least one of the first and second extension portions 310 and 320.

In addition, each of the first and second driving parts 351 and 352 is sufficient as a driving unit capable of providing the tension to the first and second extension portions 310 and 320, and the type of the driving unit is not limited.

For example, each of the first and second driving parts 351 and 352 may include a linear motor, an air pressure cylinder, a roller and so on, and then the tension along the arrow direction may be applied.

A plurality of the tension wires 400 is formed on the gripping surface 120 along the second direction Y

For example, each of the tension wires 400 extends along the second direction Y, and the tension wires 400 are spaced apart from each other along the first direction X.

Here, the tension wires 400 extend along the second direction Y with having a length longer than an area in which the openings 110 are formed. The locations of the tension wires 400 may be regardless of the pattern or the position of the openings 110.

As far as the distance between the tension wires 400 is maintained to be constant, the positions or the locations of the tension wires 400 are regardless of the positions of the openings 110.

The tension wires 400 are formed at the same location along the third direction Z, and as illustrated in FIG. 3A, the tension wires 400 may be positioned at a second height h2 from the gripping surface 120.

Here, as illustrated in figure, the second height h2 may be larger than the first height h1. Thus, the tension wires 400 may be located above the deformation applying portion of the deformation extension portion 300, that is, at a position farther from the gripping surface 120.

A first end of each of the tension wires 400 passes through the body portion 100 and is fixed at a first side of the body portion 100 along the second direction Y, and a second end of each of the tension wires 400 passes through the body portion 100 and is fixed at a second side of the body portion 100 along the second direction Y Here, the fixing type or method may not be limited.

For example, both ends of the tension wires 400 may be fixed at a groove formed at both sides of the body portion 100, respectively.

Unlike the deformation extension portion 300 deforming the shape of the body portion 100, the tension wires 400 apply the tension along a predetermined direction to the body portion 100 having the gripping surface 120.

A tensile stiffness of each of the tension wires 400 is larger than the stiffness of the body portion 100, and a compressive stiffness of each of the tension wires 400 is the same as or smaller than the stiffness of the body portion 100.

Thus, since the tensile stiffness of the tension wires 400 is larger than the stiffness of the body portion 100, the tension of the tension wires 400 is larger than the tension induced due to the body portion 100 having constant rigidity.

Since the tension of the tension wires 400 is larger than the tension of the gripping surface 120 and the plurality of the tension wires 400 extends along the second direction Y, the tension along the second direction Y is determined by the tension of the tension wires 400.

In contrast, since the tension wires 400 do not extend along the first direction X, the tension along the first direction X is regardless of the tension of the tension wires 400, and thus the tension along the first direction X is determined by the tension of the gripping surface 120 which is determined by the stiffness of the body portion 100.

Then, the surface tension of the gripping surface 120 along the second direction Y is substantially same as the tension of the wire tensions 400. The surface tension of the gripping surface 120 along the first direction X is the same as the tension determined by the stiffness of the body portion 100.

Here, since the tension of the tension wires 400 is larger than the tension determined by the body portion 100, the surface tension of the gripping surface 120 along the second direction Y is maintained to be larger than that along the first direction X.

Even though the body portion 100 is deformed with folded with respect to the stain applying portion 330 due to the stain extension portion 300, the tension along the second direction Y is maintained to be relatively larger, and thus the gripping force on the object may be effectively maintained as explained below.

Accordingly, in the present example embodiment, the tension along a predetermined distance is maintained to be relatively larger due to the tension wires 400, in addition to the deformation of the body portion 100 due to the stain extension portion 300, and thus the gripping for the object may be performed more effectively.

Hereinafter, the deformation state of the body portion 100 according to an operation of the stain extension portion 300 is explained.

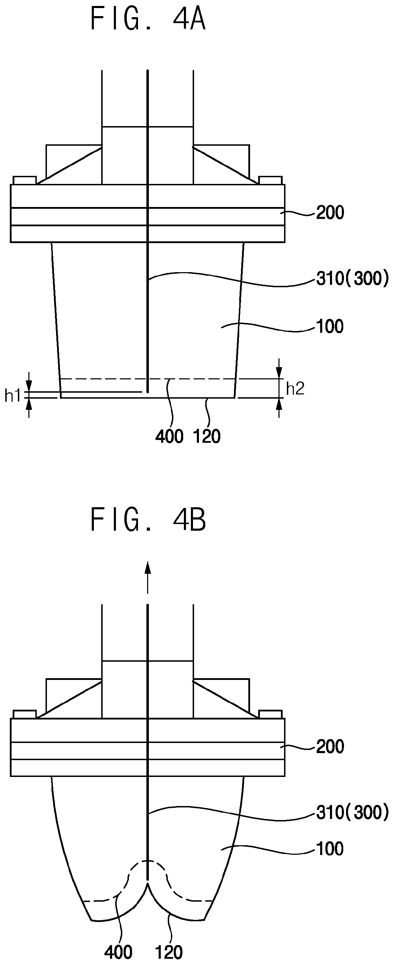

FIG. 4A to FIG. 4C are side views illustrating a deformed state of the body portion according to an operation of the deformation extension portion, in the gripper of FIG. 1.

Referring to FIG. 4A, before the tension is applied to the stain extension portion 300, the body portion 100 is maintained to be the cube shape in a whole. Here, the stain applying portion 330 of the stain extension portion 300 is positioned at the first height h1 from the gripping surface 120, and the tension wires 400 is positioned at the second height h2 from the gripping surface 120, as explained above.

Then, referring to FIG. 4B, when the tension along the arrow direction of FIG. 2 is applied to the first and second extension portions 310 and 320 of the stain extension portion 300, the stain applying portion 330 moves upwardly, that is, toward the fixing portion 200.

Thus, the central portion of the gripping surface 120 in which the stain extension portion 300 extends is also pulled upwardly, and the gripping surface 120 is deformed to be folded with a central line at the center where the deformation applying portion 300 extends.

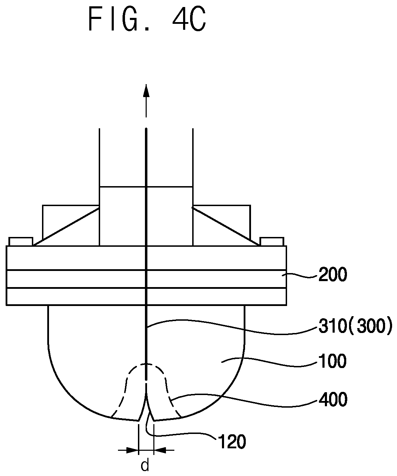

Then, referring to FIG. 4C, as the tension is additionally applied to the deformation extension portion 300, the gripping surface 120 is deformed to be entirely folded with the central line at the center where the deformation applying portion 300 extends.

Then, the body portion 100 is also deformed to be compressed in a whole, and the side of the body portion 100 is deformed to form a curved surface.

Here, as illustrated in FIG. 4C, even though the body portion 100 is entirely folded, both end sides of the gripping surface 120 may be disposed to be spaced apart from each other by a predetermined distance 'd'.

Accordingly, the gripping surface 120 is deformed to be entirely folded with the central line in which the deformation applying portion 300 extends, and here, when the object is disposed on the gripping surface 120, the object is covered and gripped by the gripping surface 120.

In addition, with the gripping state, when the suction unit 250 provides the suction force to the openings 110, the space in which the folded gripping surfaces 120 face each other and in which the object is disposed is maintained to be the vacuum state. Thus, the object may be gripped more effectively and stably.

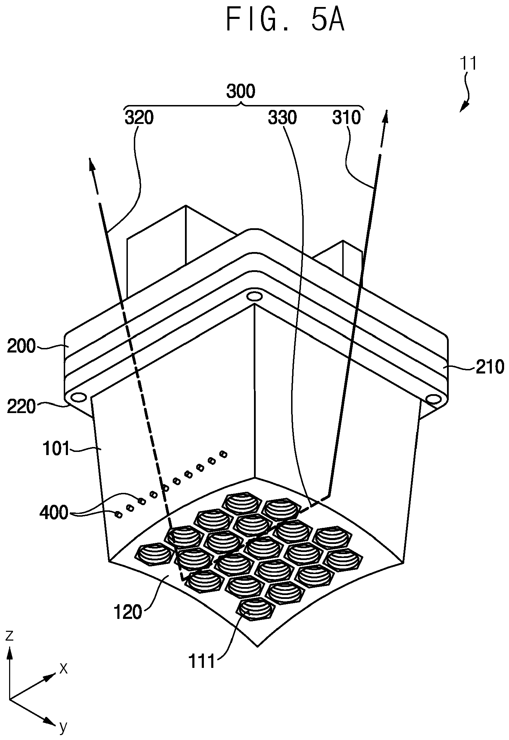

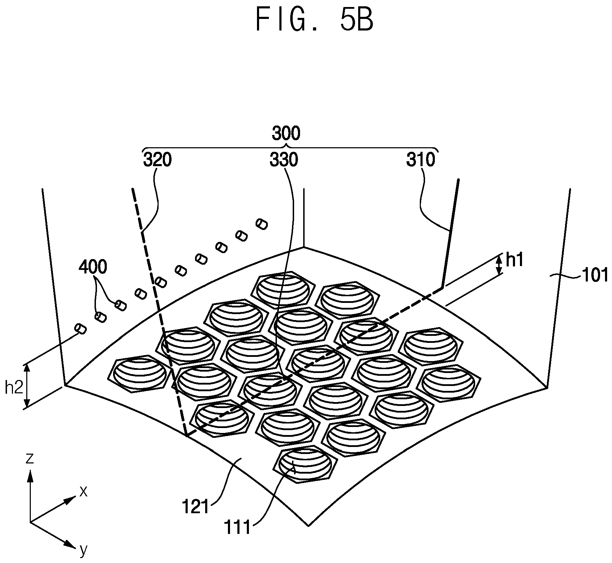

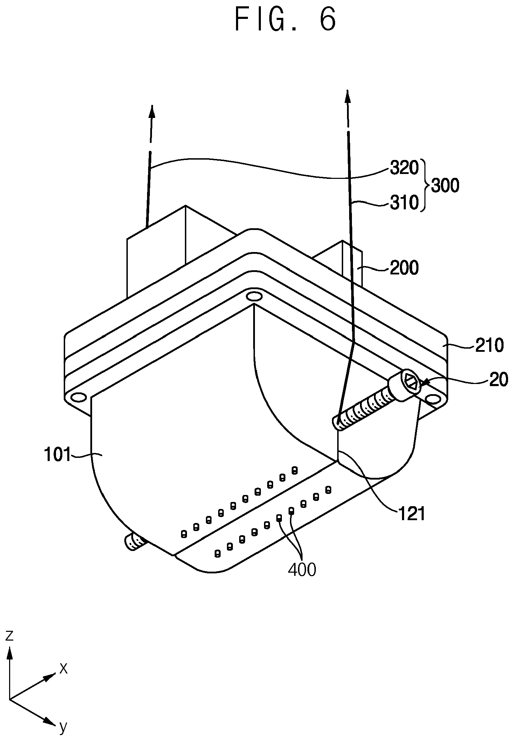

FIG. 5A is a perspective view illustrating a body portion and a fixing portion in a gripper according to another example embodiment of the present invention, and FIG. 5B is a perspective view illustrating a connection state of a deformation extension portion and a tension wire of FIG. 5A. FIG. 6 is a perspective view illustrating a gripping state of an object using the gripper of FIG. 5A.

The gripper 11 according to the present example embodiment is substantially same as the gripper 10 according to the previous example embodiment of FIG. 1 to FIG. 3B, except for an curved shape of a gripping surface 121, and thus the same reference numerals are used for the same elements and any repetitive explanation will be omitted.

Referring to FIG. 5A and FIG. 5B, in the gripper 11 according to the present example embodiment, the gripping surface 121 formed on a bottom surface of a body portion 101 has a curved shape.

The body portion 101 may have the cube shape in a whole, and the plurality of the openings 110 passing through the body portion 101 from the gripping surface 121 may be formed same as explained above.

However, as illustrated in the figure, the gripping surface 121 may have the curved shape having a predetermined curvature, without being a plane shape.

A central portion of the gripping surface 121 is relatively recessed, and four edges of the gripping surface 121 are relatively protruded. The gripping surface 121 may be formed as a curved surface with a predetermined curvature, such as a portion of an outer peripheral surface of a sphere in a whole.

As explained above referring to FIG. 4C, when the gripping surface 120 has the plane shape, both sides of the gripping surface 120 may be spaced apart from each other, even though the gripping surface 120 is entirely folded.

Thus, the gripping for the object may not be effectively performed, and the object may be failed to be gripped.

However, referring to FIG. 6, in the present example embodiment, when the gripping surface 121 has a predetermined curvature and is formed to have the curved shape with a recessed central portion, both sides of the gripping surface 120 are folded to be tightly adhered to each other without being spaced apart.

Thus, the gripping for the object may be effectively and stably performed.

For example, as illustrated in FIG. 6, when the object 20 is a screw with threads formed on an outer circumference, a frictional force between the outer circumference of the object 20 and the gripping surface 120 is relatively low and the gripping for the object 20 is not easy.

However, in the present example embodiment, as the gripping surface 121 has the recessed shape with a predetermined curvature, both sides of the gripping surface 120 are folded to be tightly adhered to each other without being spaced apart, in gripping the object 20. Thus, the gripping for the object having less frictional force may be effectively and stably performed.

In the process of the gripping, when the suction force is provided to the openings 111 by the suction unit 250, the gripping for the object 20 may be effectively and stably performed, since an inner space of the gripping surface 121 in which both sides are in complete contact forms a stable vacuum state.

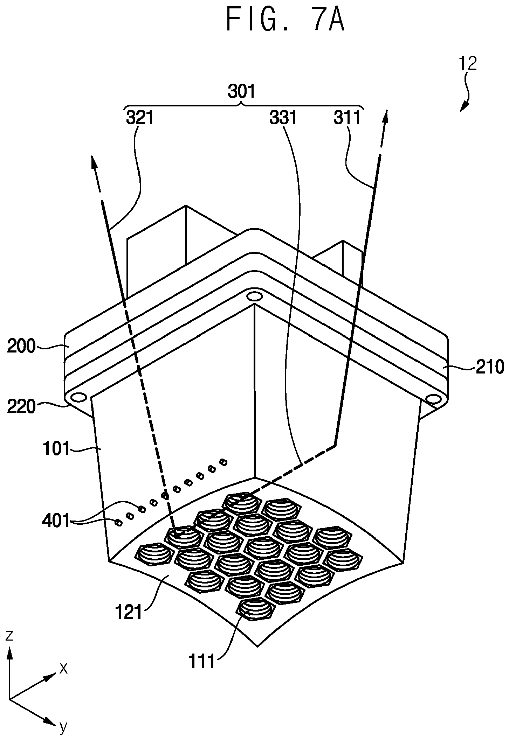

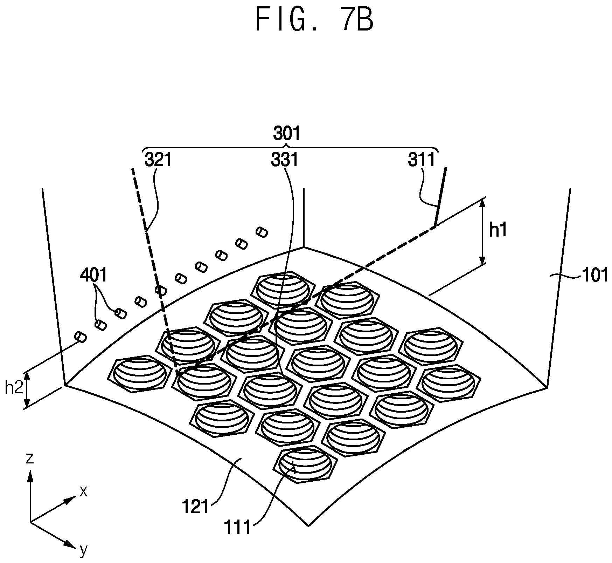

FIG. 7A is a perspective view illustrating a body portion and a fixing portion in a gripper according to still another example embodiment of the present invention, and FIG. 7B is a perspective view illustrating a connection state of a deformation extension portion and a tension wire of FIG. 7A.

The gripper 12 according to the present example embodiment is substantially same as the gripper 11 according to the previous example embodiment of FIG. 5A to FIG. 5B, except for a difference between the first and second heights h1 and h2, and thus the same reference numerals are used for the same elements and any repetitive explanation will be omitted.

Referring to FIG. 7A and FIG. 7B, in the gripper 12 according to the present example embodiment, the deformation applying portion 331 of the deformation extension portion 301 is positioned at the first height h1 from the gripping surface 121.

In addition, each of the tension wires 401 is positioned at the second height h2 from the gripping surface 121.

Here, since the gripping surface 121 has a predetermined curvature, a reference position for each of the first and second heights may be different, but if the curvature of the gripping surface 121 is assumed to be very large, the difference of the reference positions between the first and second heights may be negligible.

Thus, in the present example embodiment, the first height h1 is larger than the second height h2. The deformation applying portion 331 is disposed farther from the gripping surface 121 than the tension wires 401.

Accordingly, even though the deformation applying portion 331 is disposed over the tension wires 401, the gripping surface 121 is deformed to be folded by the tension applying to the deformation applying portion 331, as explained above. Thus, the gripping surface 121 grips the object more effectively and stably.

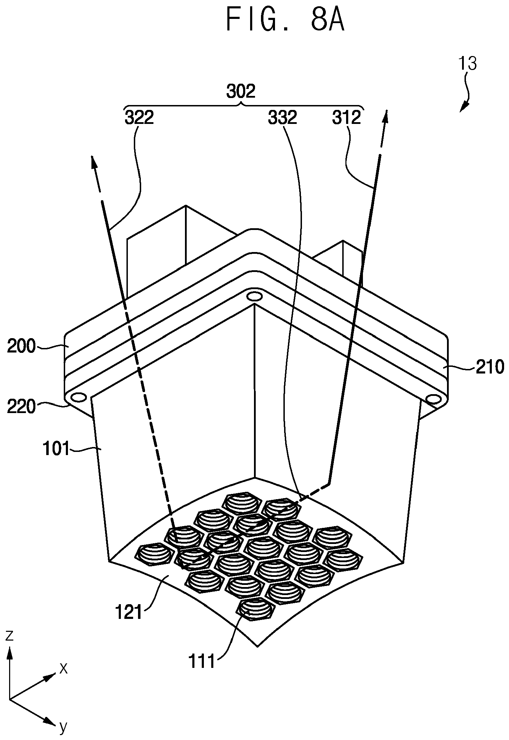

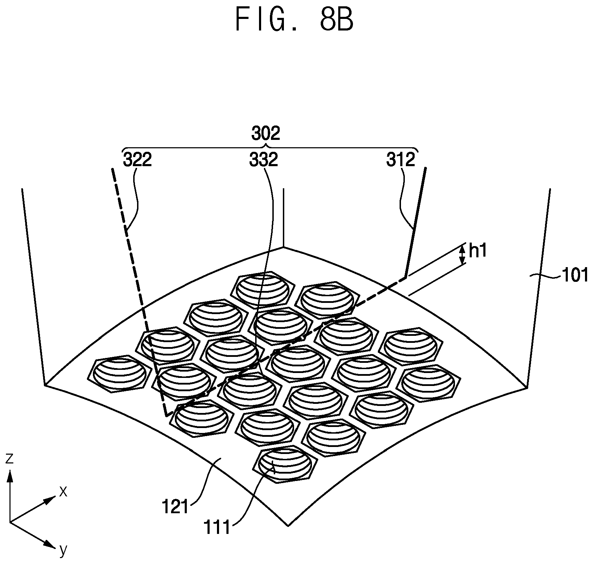

FIG. 8A is a perspective view illustrating a body portion and a fixing portion in a gripper according to still another example embodiment of the present invention, and FIG. 8B is a perspective view illustrating a connection state of a deformation extension portion of FIG. 8A.

The gripper 13 according to the present example embodiment is substantially same as the gripper 11 according to the previous example embodiment of FIG. 5A to FIG. 5B, except for omitting the tension wire and providing only a deformation extension portion 302, and thus the same reference numerals are used for the same elements and any repetitive explanation will be omitted.

Referring to FIG. 8A and FIG. 8B, in the gripper 13 according to the present example embodiment, only the deformation extension portion 302 is disposed on the gripping surface 121.

Here, a deformation applying portion 332 of the deformation extension portion 302 is disposed at the first height h1 from the gripping surface 121, and the deformation applying portion 332 passes through the body portion 101. Here, the height h1 may be variously changed.

Even though the deformation extension portion 302 is only configured, the tension applied by the deformation extension portion 302 forces the gripping surface 121 to be folded with the central line at the center where the deformation applying portion 300 extends. Then, the deformation of the body portion 101 is the same as explained above.

Thus, the object may be gripped effectively and stably by the gripper 13 according to the present example embodiment.

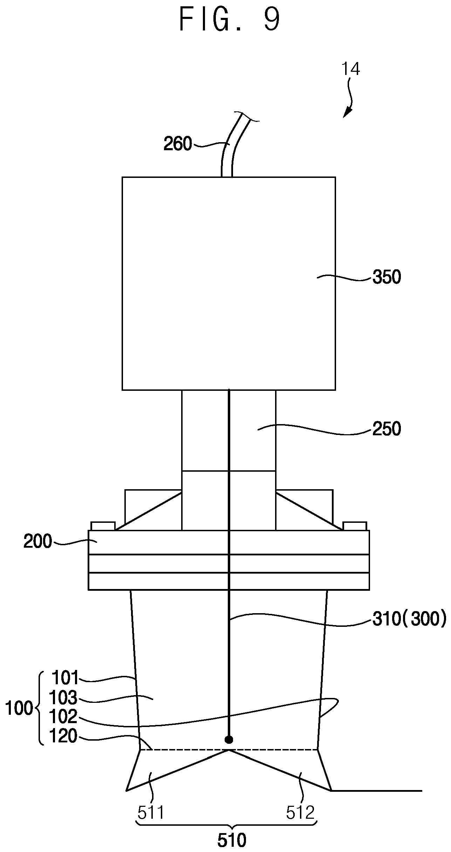

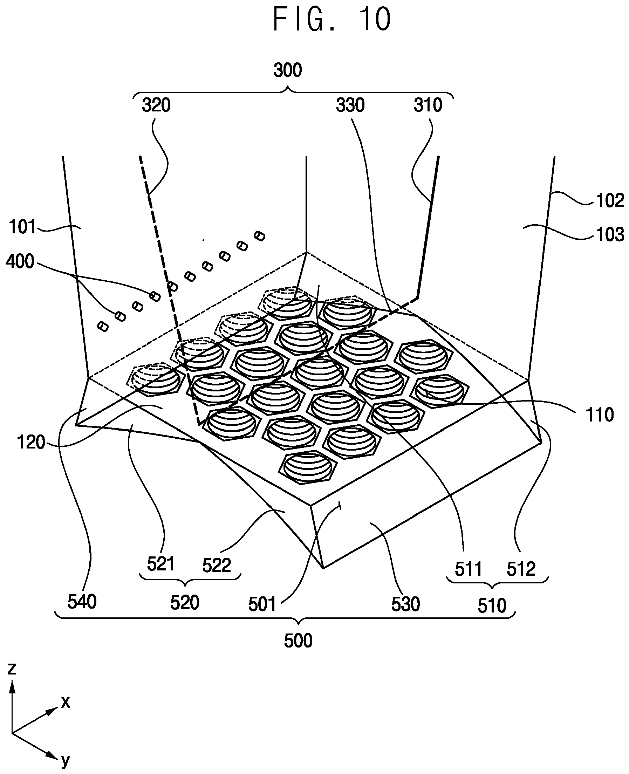

FIG. 9 is a front view illustrating a gripper according to still another example embodiment to the present invention. FIG. 10 is a perspective view illustrating a gripping surface and an extension portion of FIG. 9.

The gripper 14 according to the present example embodiment is substantially same as the gripper 1 according to the previous example embodiment of FIG. 1, except for an extension portion 500, and thus the same reference numerals are used for the same elements and any repetitive explanation will be omitted.

Referring to FIG. 9 and FIG. 10, the gripper 14 according to the present example embodiment further includes the extension portion 500.

The extension portion 500 extends downwardly from the gripping surface 120, that is, toward the object.

Here, the gripping surface 120 has the rectangular shape, and thus the extension portion 500 extends from each edge of the gripping surface 120, and the extension portion 500 includes first to fourth extension surfaces 510, 520, 530 and 540.

The first extension surface 510 extends downwardly from a first edge of the gripping surface 120, and here the first edge is an edge extending from a third side surface 103 of the body portion 100. Thus, the first extension surface 510 extends downwardly from the third side surface 103.

Here, the first extension portion 310 of the deformation extension portion 300 extends along the third side surface 103, passes through the third side surface 103 and then extends along the first direction X. Thus, the first extension surface 510 is formed to be perpendicular to the extension direction of the deformation applying portion 330.

The first extension surface 510 includes a pair of first inclined surfaces 511 and 512. Each of the first inclined surfaces 511 and 512 may have a triangular shape as illustrated in the figure.

Thus, each of the first inclined surfaces 511 and 512 has the triangular shape whose extension length increases toward both sides with respect to a starting point of the central line along which the gripping surface 120 is folded.

A first side first inclined surface 511 may have the triangular shape whose length increases in a direction from the central line toward the fourth extension surface 540. A second side first inclined surface 512 may have the triangular shape whose length increases in a direction from the central line toward the third extension surface 530. Thus, the pair of the first inclined surfaces 511 and 512 is symmetric with respect to the central line.

In gripping the object by the gripping surface 120, the pair of the first inclined surfaces 511 and 512 is folded to face each other as the gripping surface 120 is folded along the central line. Here, in the folding, the pair of the first inclined surfaces 511 and 512 is not overlapped with each other. Thus, as the gripping surface 120 is folded along the central line, lower surfaces of the pair of the first inclined surfaces 511 and 512 are not interfered or overlapped with each other and make tight contact with each other.

The second extension surface 520 extends downwardly from a second edge of the gripping surface 120, and the second extension surface 520 faces the first extension surface 510. Here, the second edge of the gripping surface 120 is an edge extending from a fourth side surface (not shown) of the body portion 100, and the fourth side surface of the body portion 100 faces a third side surface 103 of the body portion 100.

Here, the second extension surface 520 includes a pair of second inclined surfaces 521 and 522, as the first extension surface 510. Each of the second inclined surfaces 521 and 522 is formed symmetrically and identically to the shape of the pair of the first inclined surfaces 511 and 512.

A first side second inclined surface 521 is formed symmetrically and identically to the shape of the first side first inclined surface 511, and then has the triangular shape whose length increases in a direction from the central line toward the fourth extension surface 540. Likewise, a second side second inclined surface 522 is formed symmetrically and identically to the shape of the second side first inclined surface 512, and then has the triangular shape whose length increases in a direction from the central line toward the third extension surface 530. Thus, the pair of the second inclined surfaces 521 and 522 is symmetric with respect to the central line.

In gripping the object by the gripping surface 120, the pair of the second inclined surfaces 521 and 522 is folded to face each other as the gripping surface 120 is folded along the central line. Here, in the folding, the pair of the second inclined surfaces 521 and 522 is not overlapped with each other. Thus, as the gripping surface 120 is folded along the central line, lower surfaces of the pair of the second inclined surfaces 521 and 522 are not interfered or overlapped with each other and make tight contact with each other.

The third extension surface 530 connects a first end of the first extension surface 510 with a first end of second extension surfaces 510 and 520, and extends downwardly from a third edge of the gripping surface 120. Here, the third edge of the gripping surface 120 is an edge extending from a second side surface 102 of the body portion 100 and located at the end.

Unlike the first and second extension surfaces 510 and 520, the third extension surface 530 extends with a constant length. The third extension surface 530 may have a rectangular shape in a whole.

As illustrated in FIG. 9, when the third extension surface 530 extends from the edge of the gripping surface 120, the third extension surface 530 extends outwardly from an extension direction of the second side surface 102 of the body portion 100. Unlike the body portion 100, which extends in a somewhat narrow or constant shape from the upper portion to the lower portion as a whole, the third extension surface 530 expands and extends outwardly from the upper portion to the lower portion.

Accordingly, as the third extension surface 530 expands and extends outwardly, the gripping area formed by the gripping surface 120 and the extension portion 500 may be increased more and the gripping force formed in the gripping may be increased more.

The fourth extension surface 540 connects a second end of the first extension surface 510 with a second end of second extension surfaces 510 and 520, and extends downwardly from a fourth edge of the gripping surface 120. Here, the fourth edge of the gripping surface 120 is an edge extending from a first side surface 101 of the body portion 100 and located at the end.

The fourth extension surface 540 has the shape substantially same as the third extension surface 530, except that the fourth extension surface 540 is symmetric to the third extension surface 530.

In addition, like the extension of the third extension surface 530, when the fourth extension surface 540 extends from the edge of the gripping surface 120, the fourth extension surface 540 extends outwardly from an extension direction of the first side surface 101 of the body portion 100.

Accordingly, as both of the third and fourth extension surfaces 530 and 540 expand and extend outwardly in extending toward a lower direction, the gipping area formed by the gripping surface 120 and the extension portion 500 may be increased more and the gripping force formed in the gripping may be increased more.

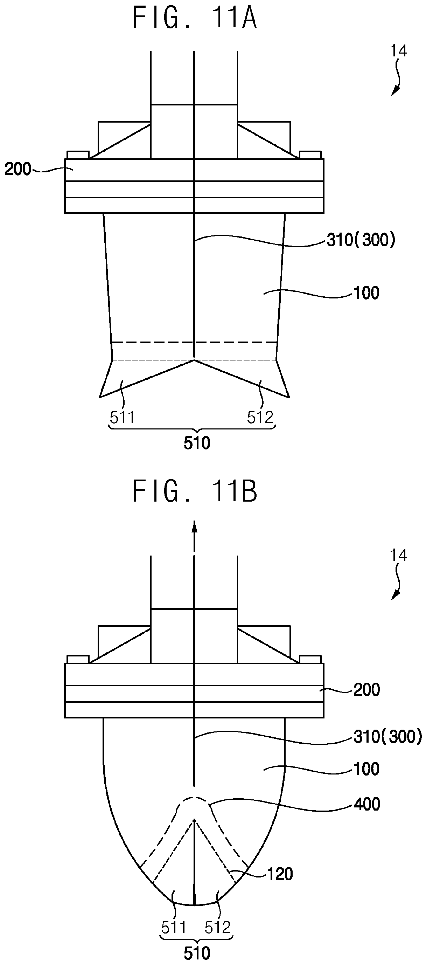

Further, when the gripping surface 120 is folded along the central line in gripping the object, ends of the third and fourth extension surfaces 530 and 540 face and make contact with each other. In addition, as the gripping performs, the third and fourth extension surfaces 530 and 540 tightly adhere to each other and a gripping space 550 inside between the third and fourth extension surfaces 530 and 540 is enclosed. FIG. 11A and FIG. 11B are front views illustrating a gripping state of an object in the gripper having the extension portion;

Referring to FIG. 11A and FIG. 11B, in the gripper 14 having the extension portion 500 according to the present example embodiment, the gripping surface 120 is folded along the central line and the extension portion 500 extending from the end of the gripping surface 120 is folded too, as the body portion 100 is folded for gripping the object due to the tension of the deformation extension portion 300.

Here, the ends of the third and fourth extension surfaces 530 and 540 are respectively disposed at both ends with respect to the central line of the gripping surface 120 are folded to tightly adhere to each other, and likewise, each of the first and second extension surfaces 510 and 520 is folded to adhere to each other tightly.

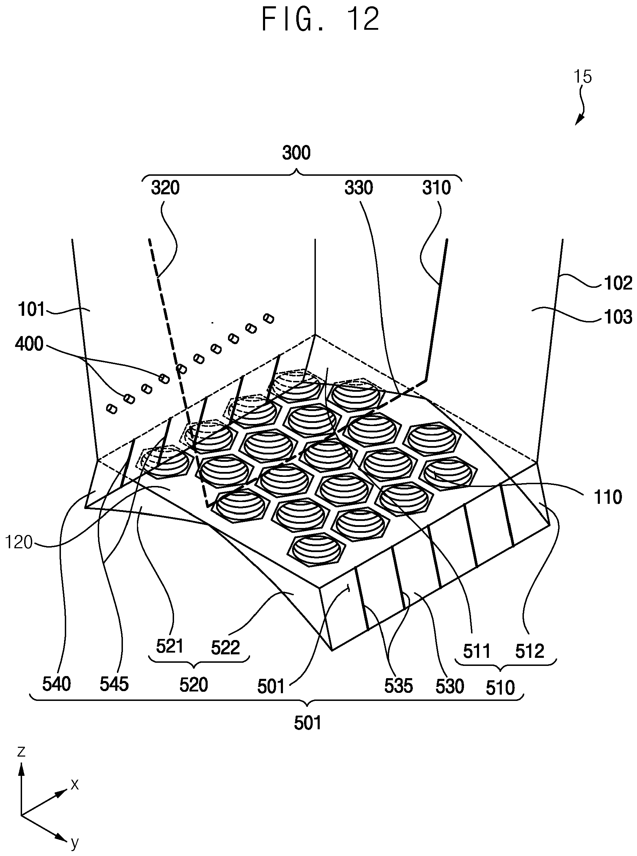

Accordingly, the object gripped on the gripping surface 120 is gripped with a relatively larger gripping force, since the gripping space 550 is completely enclosed and a space or an interval detached outwardly is not formed. FIG. 12 is a perspective view illustrating a gripping surface and an extension portion in a gripper according to still another example embodiment of the present invention.

The gripper 15 according to the present example embodiment is substantially same as the gripper 14 according to the previous example embodiment of FIG. 9, except for rib formed on the third and fourth extension surfaces 530 and 540, and thus the same reference numerals are used for the same elements and any repetitive explanation will be omitted.

Referring to FIG. 12, in the gripper 15 according to the present example embodiment, a first rib 535 is formed on the third extension surface 530, and a second rib 545 is formed on the fourth extension surface 540.

As explained above, the third extension surface 530 has the rectangular shape and extends with a constant length, and thus a plurality of the first ribs 535 is formed on the third extension surface 530.

Each of the first ribs 535 extends longitudinally along a lower direction in which the third extension surface 530 extends. In addition, the first ribs 535 are spaced apart from each other by a predetermined distance along a direction perpendicular to the extending direction of the first ribs 535.

A plurality of the second ribs 545 is formed on the fourth extension surface 540, and the arrangement and the structure of the second rib 545 is substantially same as the first rib 535 except that the second rib 545 is symmetric to the first rib 535.

Each of the second ribs 545 extends longitudinally along a lower direction in which the fourth extension surface 540 extends. In addition, the second ribs 545 are spaced apart from each other by a predetermined distance along a direction perpendicular to the extending direction of the second ribs 545.

Here, the first and second ribs 535 and 545 are respectively protruded from the third and fourth extension surfaces 530 and 540 with a predetermined frame shape, and the material of the first and second ribs 535 and 545 is harder than that of the extension surfaces 530 and 540.

Each of the first and second ribs 535 and 545 may include a flexible material, and thus the adhesion to the object may be enhanced in the gripping.

Accordingly, the gripping force may be more enhanced in the gripping, since the first and second ribs 535 and 545 are respectively formed on the third and fourth extension surfaces 530 and 540.

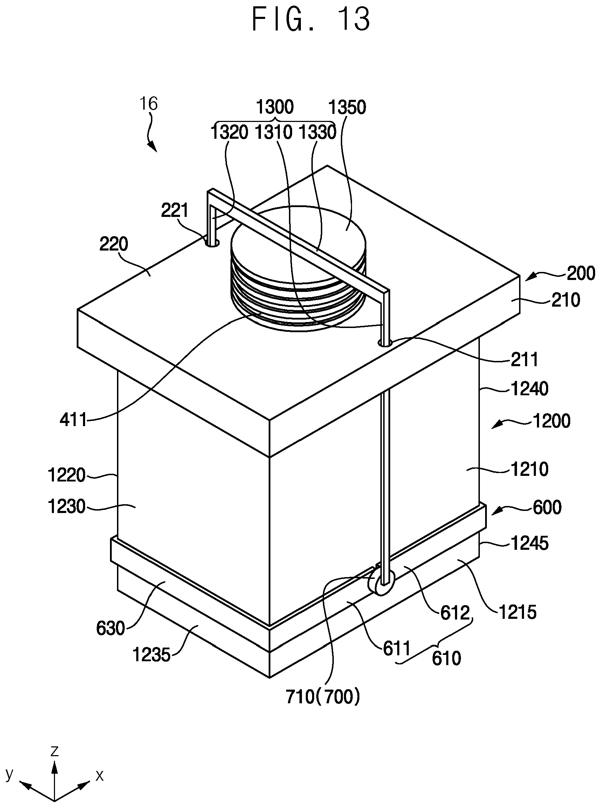

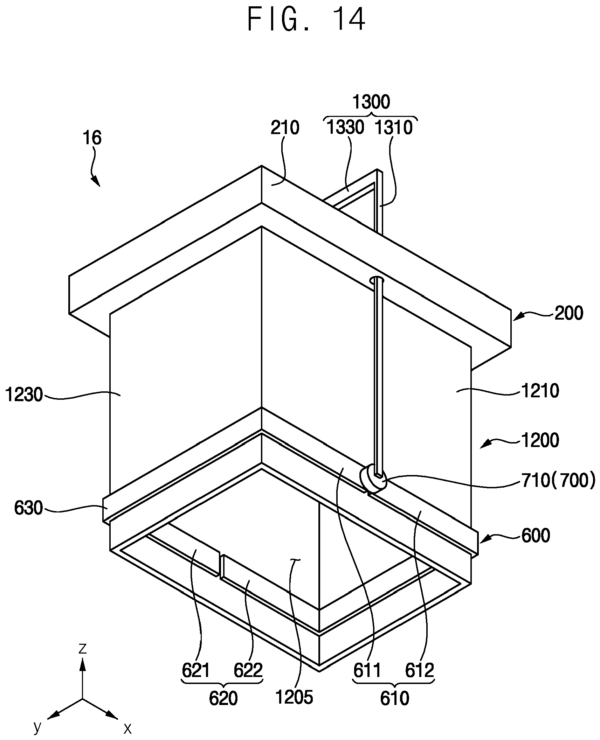

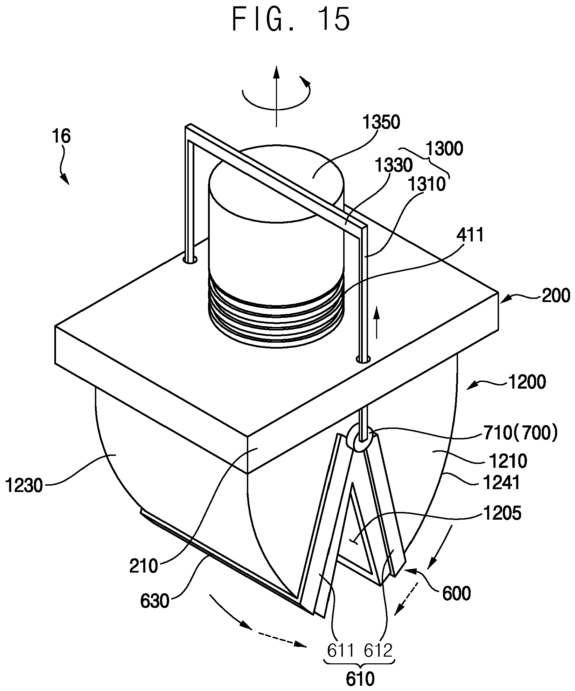

FIG. 13 is a perspective view illustrating a gripper according to still another example embodiment of the present invention. FIG. 14 is a perspective view illustrating the gripper of FIG. 13 in a different direction. FIG. 15 is a perspective view illustrating a state in which the body portion of the gripper of FIG. 13 retracts like a pincer-shape.

Referring to FIG. 13 to FIG. 15, the gripper 16 according to the present example embodiment includes a fixing portion 200, a body portion 1200, a rigid portion 600, a driving unit 1350, a deformation extension portion 1300 and a joint unit 700.

The fixing portion 200 extends along an XY plane formed by the first direction X and the second direction Y, and may have a plate shape with a predetermined thickness.

Here, the fixing portion 200 may be the same structure as the fixing portion 200 explained above.

However, in the present example embodiment, in the fixing portion 200, a first hole 211 is formed at a first upper side 210, and a second hole 221 is formed at a second upper side 220.

In addition, in the present example embodiment, the driving unit 1350 is connected to the fixing portion 200, and although not shown in the figure, an additional suction unit may be configured. The suction unit may be connected to the fixing portion 200 at a position different from the driving unit 1350. The suction unit may be connected to a gripping space 1205 with passing through the fixing portion 200.

Then, the suction unit provides the suction force to the gripping space 1205, and thus the object disposed in the gripping space 1205 may be tightly gripped.

The body portion 1200 is connected to a lower surface of the fixing portion 200, and may have a rectangular block shape as a whole. The gripping space 1205 is formed inside of the body portion 1200.

For example, the body portion 1200 may include first and second side surfaces 1210 and 1220 facing each other, and third and fourth side surfaces 1230 and 1240 facing each other. The first to fourth side surfaces 1210, 1220, 1230 and 1240 form the side surfaces of the body portion 1200, and thus the gripping space 1205 is formed inside of the body portion 1200.

Here, each of the first to fourth side surfaces 1210, 1220, 1230 and 1240 may have a flexible material. The first to fourth side surfaces 1210, 1220, 1230 and 1240 may be formed separately and may be connected to each other, or may be formed integrally. In addition, the first to fourth side surfaces 1210, 1220, 1230 and 1240 has the stiffness such that the first to fourth side surfaces 1210, 1220, 1230 and 1240 may be deformed and folded in the gripping but as a whole may maintain the shape of the rectangular block when the gripping is not performed.

The rigid portion 600 is fixed at a lower side of the body portion 1220, and includes first to fourth frames 610, 620, 630 and 640.

The first frame 610 extends along a lower side of the first side surface 1210 and is fixed, the second frame 620 extends along a lower side of the second side surface 1220 and is fixed, the third frame 630 extends along a lower side of the third side surface 1230 and is fixed, and the fourth frame 640 extends along a lower side of the fourth side surface 1240 and is fixed.

Here, like the first to fourth side surfaces 1210, 1220, 1230 and 1240, the first to fourth side frames 610, 620, 630 and 640 may be respectively formed on the side surfaces and then be formed with each other as the side surfaces are connected to each other, or may be formed integrally on the side surfaces formed integrally.

The first to fourth frames 610, 620, 630 and 640 are formed along a perimeter of a lower portion of the body portion 1200 as a whole, and form the structural shape of the body portion 1200. Thus, the first to fourth frames 610, 620, 630 and 640 should have the stiffness larger than that of the body portion 1200.

When gripping the object, the body portion 1200 may be deformed and folded according to the shape of the object or the gripping state, but the deformation of the rigid portion 600 should be minimized and an entire shape and structure of the rigid portion 600 should be maintained. Thus, the predetermined force may be provided to the object and the object may be stably and effectively gripped.

The first frame 610 includes first and second separation portions 611 and 612 separated from each other, and likewise, the second frame 620 facing the first frame 610 also includes first and second portions 621 and 622 separated from each other.

Here, the first and second separation portions 611 and 612 are separated with each other at a center of the first side surface 1210 or a center of the second side surface 1220. The joint unit 700 is disposed at the center thereof in which the first and second separation portions 611 and 612 are separated.

The first and second separation portions 611 and 612 are connected to each other through the joint unit 700, and the joint unit 700 is disposed at a lower center of the first side surface 1210 or a lower center of the second side surface 1220.

Here, it is sufficient for the joint unit 700 to be configured such that the first and second separation portions 611 and 612 are relatively rotatable like a joint while the position is fixed. Then, the detailed structure or the shape of the joint unit 700 is not limited.

In addition, the joint unit 700 includes a first joint unit 710 disposed at a lower portion of the first side surface 1210 and a second joint unit (not shown) disposed at a lower portion of the second side surface 1220.

The driving unit 1350 provides a certain driving force to the rigid portion 600.

The driving unit 1350 is connected to a center of the fixing portion 200, and a screw 411 is formed on an outer surface of the driving unit 1350.

Although not shown in the figure, the driving unit 1350 receives a rotational force and then is rotated. As the driving unit 1350 rotates with a clockwise direction or a counter clockwise direction, the driving unit 1350 moves upwardly or downwardly along the third direction Z with respect to the fixing portion 200, due to the screw 411.

The deformation extension portion 1300 functions the same as the deformation extension portion 300 in the previous example embodiment of FIG. 1, but the connection with the driving unit 1350 and the connection with the rigid portion 600 are different.

However, the connecting structure of the deformation extension portion 1300 with the side surface of the body portion 1200 is substantially same as in the previous example embodiment.

The deformation extension portion 1300 includes a horizontal extension portion 1330, a first extension portion 1310 and a second extension portion 1320.

The horizontal extension portion 1330 extends parallel with the second direction Y, and the center of the horizontal extension portion 1330 is fixed at an upper surface of the driving unit 1350.

Thus, when the driving unit 1350 moves upwardly or downwardly along the third direction Z, the horizontal extension portion 1330 also moves upwardly or downwardly along the third direction Z.

The first and second extension portions 1310 and 1320 are respectively connected to both ends of the horizontal extension portion 1330, and extend toward the lower direction along the third direction Z by a predetermined length.

Here, the first extension portion 1310 extends downwardly along the third direction Z and is fixed at the first surface 1210. For example, an end of the first extension portion 1310 may be fixed to the first joint unit 710 formed on the first side surface 1210.

Likewise, although not shown in the figure, the second extension portion 1320 extends downwardly along the third direction Z and is fixed at the second surface 1220. For example, an end of the first extension portion 1320 may be fixed to the second joint unit formed on the second side surface 1220.

When the first extension portion 1310 extends downwardly, the first extension portion 1310 passes through the first hole 211 formed at the fixing portion 200, and likewise, the second extension portion 1320 extends with passing through the second hole 221.

Thus, when the driving unit 1350 moves downwardly or upwardly along the third direction Z, the horizontal extension portion 1330 moves downwardly or upwardly, and thus the first and second extension portions 1310 and 1320 move downwardly or upwardly along the third direction Z.

Finally, the first and second joint units respectively fixed at the ends of the first and second extension portions 1310 and 1320 move up and down along the third direction Z.

In the body portion 200, first to fourth extension surfaces 1215, 1225, 1235 and 1245 extends downwardly from the first to fourth side surfaces 1210, 1220, 1230 and 1240.

The first extension surface 1215 is formed by additionally extended downwardly from the first frame 610 in the first side surface 1210. Likewise, the second to fourth extension surfaces 1225, 1235 and 1245 are formed by additionally extended downwardly from the second to fourth frames 620, 630 and 640 in the second to fourth side surfaces 1220, 1230 and 1240, respectively.

Here, the extension length of each of the first to fourth extension surfaces 1215, 1225, 1235 and 1245 may be variously changed, and then may be determined by the positions of the first to fourth frames.

The first to fourth extension surfaces 1215, 1225, 1235 and 1245 may be the surfaces separately formed from the first to fourth side surfaces 1210, 1220, 1230 and 1240. Alternatively, the first to fourth extension surfaces 1215, 1225, 1235 and 1245 may be integrally formed with the first to fourth side surfaces 1210, 1220, 1230 and 1240 but the sections thereof may be merely divided by the rigid portion 600.

Thus, the first to fourth extension surfaces 1215, 1225, 1235 and 1245 may include the flexible material same as the body portion 200. Alternatively, the first to fourth extension surfaces 1215, 1225, 1235 and 1245 may include the material more flexible than the first to fourth side surfaces 1210, 1220, 1230 and 1240.

Accordingly, as the first to fourth extension surfaces 1215, 1225, 1235 and 1245 include more flexible material, the first to fourth extension surfaces 1215, 1225, 1235 and 1245 may tightly adhere to an irregular surface of the object 2 more effectively, even though the surface of the object 2 is irregular, in gripping the object 2. At an initial state or a normal state, the driving unit 1350 of the gripper 16 is located at an initial position, and thus the body portion 200 has the rectangular shape as a whole, as illustrated in FIG. 13 and FIG. 14.

Here, the gripping space 1205, as illustrated in the figure, may have an inlet with the rectangular shape, and the gripping space 1205 may be uniformly maintained, too.

At this initial state or normal state, the gripper 16 provides the suction force to the gripping space 1205 using the suction unit and the object is to be gripped, which is very similar to the structure where a suction cup absorbs the object.

Alternatively, the gripper 16 is deformed to a pincer-shape as in FIG. 15, and then grips the object.

As the driving unit 1350 is protruded upwardly along the third direction Z, as explained above, the first and second extension portions 1310 and 1320 moves upwardly, and then the first and second joint units moves upwardly, too.

Here, since the first and second separation portions 611 and 612 of the first frame 610 separated from each other are connected to the first joint unit 710, the first and second separation portions 611 and 612 rotates relatively with respect to the first joint unit 710 as the first joint unit 710 moves upwardly.

In addition to the rotation of the first and second separation portions 611 and 612, the central portion of the first side surface 1210 along which the first extension portion 1310 extends moves upwardly and is folded. The folded shape of the first side surface 1210 is the shape in which the length of the first side surface 1210 decreases as the center thereof shrinks, and thus the first side surface 1210 has a pincer-shaped folding shape in which both sides are folded against each other around the central portion.

Likewise, the central portion of the second side surface 1220 facing the first side surface 1210, that is, the portion along which the second extension portion 1320 extends moves upwardly and is folded. Thus, the second side surface 1220 has a pincer-shaped folding shape in which both sides are folded against each other around the central portion.

At the same time, the first and second separation portions of the second frame 620 formed at the second side surface 1220 rotates relatively with respect to the second joint unit.

The first and second separation portions 611 and 612 extend while bending against each other in a 'A' shape as illustrated in FIG. 15.

Further, as illustrated in an arrow of a solid line in FIG. 15, as the centers of the first and second side surfaces 1210 and 1220 facing each other are folded upwardly, the second and fourth side surfaces 1230 and 1240 are relatively elongated, and the third and fourth extension surfaces 1235 and 1245 are closer to each other.

Then, the gripping space 1205 is concentrated in the center and becomes narrow.

Thus, as the body portion 200 is deformed and the gripping space 1205 becomes narrow as explained above, the gripper 16 grips the object more effectively and stably.

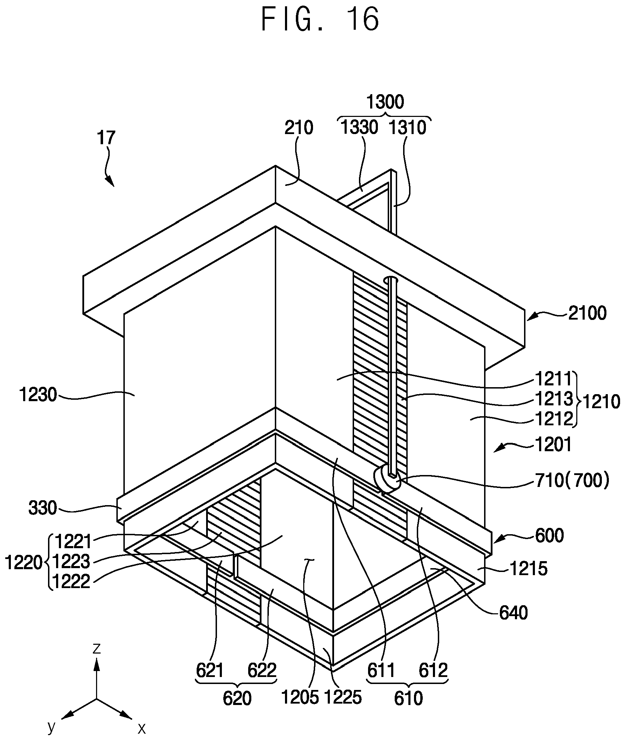

As explained above, the suction unit provides the suction force to the gripping space 1205 with the object being gripped. As the suction force is provided, as illustrated in an arrow of a dashed line in FIG. 15, the third and fourth extension surfaces 1235 and 1245 are much closer to each other and the object is gripped more tightly. Accordingly, more increased gripping force may be provided to the object in the gripping space 1205, and then the gripping may be performed more effectively and stably. FIG. 16 is a perspective view illustrating a gripper according to still another example embodiment of the present invention.

The gripper 17 according to the present example embodiment is substantially same as the gripper 16 according to the previous example embodiment of FIG. 13 to FIG. 15, except for a structure of a body portion 1201, and thus the same reference numerals are used for the same elements and any repetitive explanation will be omitted.

Referring to FIG. 16, in the gripper 17 according to the present example embodiment, a first side surface 1210 and a second side surface 1220 of the body portion 1201 include a wrinkle structure.

The first side surface 1210 includes a wrinkle portion 1213 formed at a center in which the first extension portion 1310 extends, a first side surface portion 1211 formed at a first side of the wrinkle portion, and a second side surface portion 1212 formed at a second side of the wrinkle portion.

The first and second side surface portions 1211 and 1212 have the same area and are symmetric to each other with respect to the wrinkle portion 1213, and may have the stiffness substantially same as the first side surface of the gripper 16.

Alternatively, an area of the wrinkle portion 1213 may be smaller than or the same as that of the first side surface portion 1211.

In addition, the wrinkle portion 1213 may have a compressive stiffness smaller than the stiffness of each of the first and second side surface portions 1211 and 1212, and may be bellows structure with continuous wrinkle structure.

The structure formed at the center of the wrinkle portion 1213 is applied to the second surface 1220, although not shown in the figure, and the surfaces facing each other have the symmetric structure with the same shape.

Further, as illustrated in the figure, the wrinkle portion 1213 may be formed on the second extension surface 1225 in addition to the first extension surface 1215. Alternatively, the wrinkle portion 1213 may not be formed on the first and second extension surfaces 1215 and 1225.

Accordingly, the body portion 1201 is configured on the first and second side surfaces 1210 and 1220 with the wrinkle portion 1213 formed along the center, so that the folding or shrinking characteristics may be maximized in gripping the object, when the body portion 1201 is folded or shrunk into a pincer-shape.

Since the wrinkle portion 1213 has the compressive stiffness smaller than the first side surface portion 1211 and the second side surface portion 1212, the folding or shrinking of the first and second side surfaces 1210 and 1220 in the body portion 1201 may be performed more easily, and thus the gripping of the object may be performed more easily.

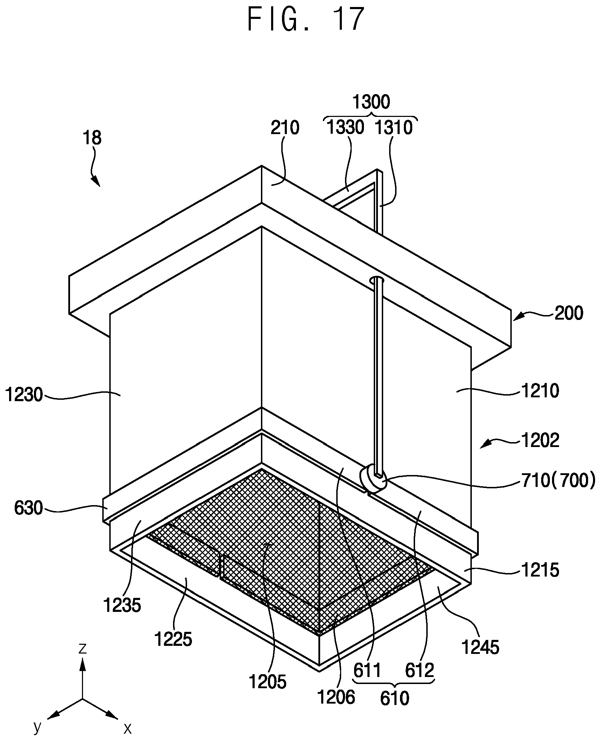

FIG. 17 is a perspective view illustrating a gripper according to still another example embodiment of the present invention.

The gripper 18 according to the present example embodiment is substantially same as the gripper 16 according to the previous example embodiment of FIG. 13 to FIG. 15, except for a structure of a body portion 1202, and thus the same reference numerals are used for the same elements and any repetitive explanation will be omitted.

Referring to FIG. 17, in the gripper 18 according to the present example embodiment, a mesh portion 1206 is further formed in the gripping space 1205 formed by the body portion 1202.

As illustrated in the figure, the mesh portion 1206 is formed under the body portion 1202 and is the structure blocking a cross-sectional area of the gripping space 1205. The mesh portion 1206 is formed along inner surfaces of the side surfaces of the body portion 1202.

Here, as illustrated in the figure, the mesh portion 1206 is formed along the inner surfaces of the first to fourth extension surfaces 1215, 1225, 1235 and 1245 which is disposed under the rigid portion 600, but the position of the mesh portion 1206 may be variously changed.

As the gripper 18 is folded for gripping the object, the mesh portion 1206 is deformed and folded by the deformation of the body portion 1202. Here, when the mesh portion 1206 is folded, the mesh portion 1206 is folded into an inner side of the gripping space 1205 and thus the interference with the object may be minimized.

In addition, the mesh portion 1206 may include various kinds of mesh materials, and then foreign substances may be prevented from being flowed into the gripping space 1205.

As explained above, a negative pressure is formed in the gripping space 1205 due to the suction unit, and the possibility that the foreign substances flows into the gripping space 1205 from the outside is very high. Thus, the mesh portion 1206 is formed at a boundary area of the gripping space 1205, so that the foreign substances are prevented from being flowed into the gripping space 1205.

According to the present example embodiments, as a tension is applied to a deformation extension portion extending from a body portion along a first direction, the body portion is folded to grip the object, and thus the thin and elongated object may be effectively gripped.

Since the body portion includes a flexible material, the body portion is easily deformed and a gripping force for the object is increased as the tension is applied to the deformation extension portion and thus the object may be effectively gripped. Here, the gripping fore for the object may be more enhanced not only when the gripping surface of the body portion is flat but especially when the gripping surface has a central portion with a curved and recessed surface.

In addition, in addition to the gripping of the object, a suction force is applied through opening portions from a suction unit and thus, a vacuum state is maintained at a gripped portion in gripping the object and the object may be gripped more easily.

Further, in addition to the deformation extension portion, a plurality of tension wires is additionally configured, and thus the tension along a direction vertical to the extension direction of the gripped object is maintained relatively larger and the gripping force for the object may be more enhanced.

Here, the positions of the tension wires and the deformation extension portion from the gripping surface are variously changed as long as the positions do not interfere with each other, and thus design flexibility may be enhanced and more effective gripping for various kinds of objects may be implemented.

In addition, an extension portion extends from the gripping surface, and especially the extension portion extends outwardly, and thus a relatively larger gripping area may be secured at an initial state and an end portion is tightly adhered with the relatively larger gripping area at a gripping state. Thus, the object having more diverse shapes and structures may be effectively gripped.

In addition, a plurality of ribs is formed at the extension portion, and thus the gripping force and the fixing force for the object may be more enhanced.

In addition, a rigid portion is formed at the body portion, and the body portion is induced to be folded along a center in a form in which the rigid portions are folded together, so that a stable folding operation may be induced in gripping the object and the gripping force may be more enhanced.

In addition, the folding structure of the rigid portion is performed by the driving of the driving part and the deformation extension portion having a shape like a wire, and the position of the driving part is constantly variable in up and down directions by a rotation due to a screw connection, so that the folding operation of the body portion for gripping the object may be stably and consistently performed.

In addition, in a general case in which the body portion is not folded, the suction force is provided into a gripping surface and the suction for the object is performed, and the suction force is provided in case of the folding of the body portion, and thus the gripping force for the object may be more enhanced.

In addition, a wrinkle portion is formed in the center of the folded side in the body portion and the wrinkle portion has a relatively lower compressive stiffness compared to the surroundings, and thus more easily folding may be implemented at the center of the body portion in folding the body portion.

In addition, a mesh portion is configured in the gripping surface and thus an inflow of foreign substances into the gripping surface may be minimized in gripping the obj ect.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A gripper comprising:
a body portion having a gripping surface on which an object is gripped;
a deformation extension portion connected to a side surface of the body portion; and
a driving unit configured to apply a force to the deformation extension portion.

2. The gripper of claim 1, wherein the deformation extension portion extends along a center of the gripping surface along a first direction,
wherein the gripping surface is folded around the deformation extension portion to grip the object as the force is applied to the deformation extension portion.

3. The gripper of claim 2, wherein the deformation extension portion extends through the body portion at a position of a first height from the gripping surface.

4. The gripper of claim 1, further comprising:
a plurality of opening portions passing through the gripping surface and extending into the body portion;
a fixing portion disposed over the body portion and configured to fix the body portion; and
a suction unit connected to an upper portion of the fixing portion and configured to provide a suction force to the opening portions.

5. The gripper of claim 4, wherein the deformation extension portion comprises:
a deformation applying portion extending on the gripping surface;
a first extension portion extending along a first side of the fixing portion and connected to the driving unit; and
a second extension portion extending along a second side of the fixing portion opposite to the first side and connected to the driving unit.

6. The gripper of claim 1, further comprising:
a plurality of tension wires extending on the gripping surface along a second direction substantially perpendicular to the first direction, without interfering with the deformation extension portion.

7. The gripper of claim 6, wherein the tension wires are arranged with a constant distance along the first direction, and a surface tension of the gripping surface along the second direction is larger than that along the first direction.

8. The gripper of claim 6, wherein a tensile stiffness of the tension wires is larger than a stiffness of the body portion, and a compressive stiffness of the tension wires is same as or smaller than the stiffness of the body portion.

9. The gripper of claim 1, wherein the body portion has a flexible material, and the gripping surface has a plane surface or a curved surface in which an edge is protruded and a central portion is recessed.

10. The gripper of claim 1, further comprising an extension portion extending toward a lower direction from an edge of the gripping surface,
wherein the extension portion has a pair of inclined surfaces formed symmetrically along a central line where the gripping surface is folded in gripping the object, and the pair of the inclined surfaces are tightly adhered to each other in gripping the object.

11. The gripper of claim 10, wherein the gripping surface has a rectangular shape, and the extension portion extends toward the lower direction from four edges of the rectangular shape to form a gripping surface between the extension portion and the gripping surface.

12. The gripper of claim 11, wherein the extension portion comprises:
first and second extension surfaces, each having the pair of the inclined surfaces, facing each other and having the same shape; and
third and fourths extension surfaces, each extending the same length, facing each other and having the same shape.

13. The gripper of claim 12, wherein each of the pair of the inclined surfaces has a triangular shape and a length increases from the central line to the third extension surface or the fourth extension surface,
wherein each of the third and fourth extension surfaces extends outwardly from the direction in which the body portion extends downward.

14. The gripper of claim 12, wherein each of the third and fourth extension surfaces has a plurality ribs, and the ribs extend toward the lower direction and are spaced apart from each other by a predetermined distance.

15. The gripper of claim 1, further comprising a rigid portion disposed under the body portion, having a stiffness larger than that of the body portion, and extending along the side surfaces of the body portion,
wherein the deformation extension portion is fixed at the rigid portion.

16. The gripper of claim 15, wherein the rigid portion comprises first and second frames respectively extending from a pair of first and second side surfaces among the side surfaces of the body portion,
wherein each of the first and second frames comprises first and second separation portions separated with each other with respect to a portion at which the deformation extension portion is connected.

17. The gripper of claim 15, wherein each of the first and second side surfaces comprises:
a wrinkle portion formed at a center; and
a pair of first and second surfaces respectively formed at both sides of the wrinkle portion,
wherein the wrinkle portion has a compressive stiffness lower than that of each of the first and second surfaces.

18. The gripper of claim 15, wherein the driving unit is screw-coupled through a fixing portion formed on an upper surface of the body portion and moves in an up and down direction,
wherein the deformation extension portion comprises a horizontal extension portion connected to the driving unit, and a pair of first and second extension portions respectively extending along a lower direction from both ends of the horizontal extension portion to be connected to the rigid portion.

19. The gripper of claim 15, wherein a gripping space is formed inside of the body portion, and a suction force is provided into the gripping space to perform suction on the obj ect.

20. The gripper of claim 19, wherein a mesh portion is formed in the gripping space to block foreign substances from being flowed into the gripping space.
